# EUROPÄISCHE PATENTSCHRIFT

(11) **EP 2 855 203 B1**
(45) Veröffentlichungstag und Bekanntmachung des Hinweises auf die Patenterteilung: **06.02.2019**
(21) Anmeldenummer: 13734674.8
(22) Anmeldetag: 27.05.2013
(51) Int. Cl.: B60P 3/40, B62D 15/02, B62D 11/00, B62D 55/06, B62D 55/065, G01B 21/22

(54) **CRAWLER ZUM TRANSPORT VON LASTEN UND EIN SYSTEM MIT EINER MEHRZAHL VON CRAWLERN SOWIE EIN VERFAHREN ZUM TRANSPORT VON LASTEN**
CRAWLER FOR TRASNPORTING LOADS, AND A SYSTEM WITH A PLURALITY OF SUCH CRAWLERS AND AS WELL A METHOD FOR TRANSPORTING LOADS
CHENILLE POUR LE TRANSPORT DE CHARGES ET UN SYSTÈME AVEC UNE PLURALITÉ DE CES CHENIELLES AINSI QUE UN PROCÉDÉ POUR LE TRANSPORT DE CHARGES

(30) Priorität: 05.06.2012 DE 202012102062 U
(43) Veröffentlichungstag der Anmeldung: 08.04.2015
(73) Patentinhaber: Berzen Ratzel, Nikolaus, 8303 Bassersdorf (CH)
(72) Erfinder: Berzen Ratzel, Nikolaus, 8303 Bassersdorf (CH)
(74) Vertreter: Kalkoff & Partner
(86) Internationale Anmeldenummer: PCT/EP2013/060885
(87) Internationale Veröffentlichungsnummer: WO 2013/182448

(56) Entgegenhaltungen:
- WO-A1-87/01667
- DE-A1- 3 610 254
- DE-B1- 2 153 492
- US-A- 3 792 745
- US-A- 4 222 581
- US-A1- 2010 126 790

## Beschreibung

Die Erfindung betrifft einen Crawler zum Transport von Lasten und ein System sowie ein Verfahren zum Transport von Lasten mit einer Mehrzahl von Crawlern. Dabei ist insbesondere an den Transport von besonders schweren Lasten von mehr als 500 t gedacht.

Ein Bereich, in dem der Transport derart großer Lasten regelmäßig erforderlich ist, ist der Bau von Offshore-Anlagen, bspw. Plattformen für Offshore-Windparks. Bauelemente hiervon werden üblicherweise in küstennahen Fabrikationsstandorten hergestellt, müssen danach aber zur Verladung noch über eine Distanz von typischerweise einigen 100 Metern transportiert werden.

Für derartig große Lasten ist insbesondere der Einsatz von SPMTs bekannt, d. h. von Schwerlastfahrzeugen mit paarweise auf Einzelachsen gelagerten Rädern. Derartige SPMTs werden für die jeweils zu transportierende Last in ausreichender Tragkraft, insbesondere mit hierauf angepasster Anzahl an Achsen, konfiguriert.

Allerdings ist für den Einsatz von SPMTs ein geeigneter Untergrund notwendig. Die Kosten für den Bau derartiger Infrastruktur, d. h. von tragfähigen, glatten Untergründen, sind dabei erheblich.

In der US 4,222,581 ist ein Verfahren und eine Vorrichtung zur Bewegung großer Objekte beschrieben, bei dem vier Crawler-Transporter in rechteckförmiger oder trapezförmiger Anordnung unter dem Objekt platziert werden. Jeder der Crawler-Transporter weist dabei zwei Kettenantriebe auf und ein hydraulisches Hebesystem, wobei die Last auf einer verschieblichen Lagerung gelagert ist. Der hydraulische Druck von zwei Hebesystemen wird dabei durch eine Verbindung der Hydraulik-Systeme ausgeglichen, so dass zwei unabhängige Lastauflagen effektiv wie ein einziger Aufnahmepunkt wirken. Die Last wird transportiert, indem jeweils ein Fahrer in jedem der Crawler-Transporter diesen so steuert, dass die Crawler-Transporter koordiniert simultan in derselben Richtung bewegt werden.

In der US 2010/0126790 ist ein Transporter beschrieben, der eine Mehrzahl von Achs-Ketteneinheiten aufweist, die jeweils drehbar an einem Rahmen angeordnet sind. Der Transporter verfügt über ein Kraftwerk mit einem Verbrennungsmotor und eine zentrale Steuerung. Die Achs-Ketteneinheiten umfassen jeweils einen elektrischen Antrieb und sind an der Unterseite des Transporters mit einer Lagerplatte verbunden, die am Ende eines Hydraulikzylinders angeordnet ist. Das Zylindergehäuse des Hydraulikzylinders ist in einem Achsrahmen der Achs-Ketteneinheit auf einem Lagerzapfen schwenkbar gelagert, um Unebenheiten auszugleichen. Der Transporter wird durch eine drahtlose Benutzerschnittstelle gesteuert, so dass er gewünschte Bewegungen in linearer Vorwärtsrichtung, rechtwinklig zu seiner Längsachse oder diagonal ausführt. Bei angehobener Last sind dabei die Hydraulikzylinder jeweils etwa auf mittlere Stellung ausgefahren, so dass eine ausgleichende Aufhängungsfunktion realisiert wird, indem jeweils die Hydraulikzylinder aus- oder eingefahren werden, um Bodenunebenheiten auszugleichen. Während der Fahrt errechnet ein Steuerrechner die Ansteueralgorithmen für die jeweiligen Achsen und versorgt diese mit Steuersignalen.

Die DE 2153492 beschreibt eine Transportvorrichtung für schwere Tagebaugeräte, die kein eigenes Fahrwerk aufweisen. An einer Stirnseite eines Rahmens des zu transportierenden Geräts sind Scheiben angebracht, die den Zylinder eines hydraulischen Druckmittelgetriebes in lotrechter Anordnung tragen. Der Zylinder kann fest am Rahmen eines Raupenfahrzeugs angebracht sein, wobei eine Kolbenstange an ihrem nach oben aus dem Zylinder herausragenden Ende eine Stützkugel trägt. Diese kann sich von unten her in eine Kugelpfanne in einer am Rahmen des zu transportierenden Geräts sitzenden Scheibe legen. Zur Fortbewegung des schweren Geräts werden die Raupenfahrwerke mittels der Zylinder und der Stützkugeln bzw. der Kugelpfanne befestigt und zunächst vom Boden abgehoben. Dann können die Raupenfahrwerke um die Mittellinien der Zylinder so gedreht werden, wie es der Richtung der beabsichtigten Fortbewegung des Geräts entspricht. Nach Ablassen der Kolbenstangen werden die Raupenfahrwerke auf den Boden aufgesetzt und können das schwere Gerät durch gleichmäßigen Antrieb gemeinsam fortbewegen.

In der US 3,612,312 ist die Handhabung besonders schwerer Lasten, insbesondere von Schiffsteilen mit einer Masse von bspw. 1.000 t beschrieben. Zum Transport wird eine Anzahl von Fahrzeugen kombiniert, die heb- und senkbare Hebemittel aufweisen in Form von teleskopisch ausfahrbaren Druckmittelkolben.

Die WO 87/01667 A1 beschreibt eine Anordnung zur Anbringung eines Sensors. Eine erste Vorrichtung ist zur Verbindung einer Welle eines ersten Sensors mit einem Ausgabeglied vorgesehen und eine zweite Vorrichtung zur Verbindung eines Körpers des ersten Sensors mit einem Gehäuse um den Körper gegen Drehung um die Welle zu halten. Dadurch wird die auf den Sensorkörper ausgeübte Kraft verringert.

Es ist Aufgabe der Erfindung, einen Crawler und ein System sowie Verfahren vorzuschlagen, mit denen sehr große Lasten einfach und exakt steuerbar transportiert werden können.

Diese Aufgabe wird gelöst durch einen Crawler nach Anspruch 1, ein System gemäß Anspruch 11 und ein Verfahren nach Anspruch 15. Abhängige Ansprüche beziehen sich auf vorteilhafte Ausführungsformen der Erfindung.

Erfindungsgemäß ist gemäß eines ersten Aspekts zunächst ein einzelner Crawler zum Transport von Lasten vorgesehen, der, wie nachfolgend noch erläutert wird, zur Verwendung in einem System oder Verfahren mit einer Mehrzahl gleicher oder gleichartiger Crawler geeignet ist.

Der Crawler weist zwei bevorzugt parallele Kettenantriebseinheiten auf. Durch einen Ketten- bzw. Raupenantrieb ergibt sich eine gute Lastverteilung auf dem Boden, wobei jeglicher verdichteter Untergrund geeignet ist. Die Kettenantriebseinheiten umfassen bevorzugt jeweils ein oder mehrere angetriebene Kettenräder, wobei auf jeder Seite mindestens zwei Kettenräder mit der Fahrkette verbunden sind.

Weiter umfasst der Crawler eine Auflagereinheit zwischen den Kettenantriebseinheiten. Die vorteilhafterweise zentral angeordnete Auflagereinheit weist einen Hubzylinder, bevorzugt einen hydraulischen Zylinder auf, mit einem Hubkolben, mit dem eine mit diesem gekoppelte Lastaufnahme in der Höhe verstellbar ist, so dass durch Ein- und Ausfahren des Hubkolbens die Lastaufnahme angehoben bzw. abgesenkt werden kann, bspw. um die Last anzuheben oder abzusetzen, oder um eine gehobene Last in der Höhe zu verstellen. In einer Weiterbildung kann der Hubzylinder auch Zugkräfte aufbringen, bspw. um den Crawler anzuheben.

Dabei ist erfindungsgemäß die Lastaufnahme nicht starr mit dem Hubkolben verbunden, sondern ist über eine Kugel/Pfanne-Verbindung so mit dem Hubzylinder gekoppelt, dass Dreh- und Schwenkbewegungen zwischen der Lastaufnahme und der Auflagereinheit möglich sind.

Unter einer Kugel/Pfanne-Verbindung wird jede Kopplung verstanden, bei der zwei gekrümmte Flächen so aufeinander liegen, dass sie die beschriebenen Relativbewegungen, d. h. eine Drehbewegung um die Längsachse des Hubzylinders ebenso wie Schwenkbewegungen um Achsen im Wesentlichen rechtwinklig zur Längsachse des Hubzylinders ausführen können. Bevorzugt umfasst die Kugel/Pfanne-Verbindung gekoppelt mit dem Hubkolben eine gerundete Tragfläche. Diese ist bevorzugt teilkugelförmig, insbesondere bevorzugt mindestens halbkugelförmig, es sind im Prinzip aber auch andere gerundete Formen möglich. Auf der Tragfläche ist seitens der Lastaufnahme eine passende Pfanne, d. h. ein konkaves Tragelement von bevorzugt gerundeter Innenfläche so aufgesetzt, dass die beschriebenen Dreh- und Schwenkbewegungen bei weiter gutem, bevorzugt flächigem Kontakt zwischen Tragfläche und Pfanne möglich sind. Durch die bevorzugte flächige Auflage wird die Belastung von Trag- und Pfannenfläche verringert und die Beweglichkeit unter Last erhöht.

Durch die dreh- und schwenkbare Verbindung der Lastaufnahme mit dem Chassis des Crawlers wird es ermöglicht, dass der Crawler die Last an seiner Lastaufnahme unterstützt und mittels seines Hubzylinders anhebt und trägt, dabei aber in seiner Ausrichtung weitgehend frei beweglich bleibt. Insbesondere kann der Crawler bei aufgenommener Last durch unterschiedlichen Antrieb der Kettenantriebseinheiten eine Drehung um eine Vertikalachse gegenüber der Last ausführen. Insbesondere für den Fall von Bodenunebenheiten und Steigungen bleibt der Crawler über die schwenkbare Verbindung stets sicher an der Last angekoppelt.

Gemäß einem vorteilhaften Aspekt der Erfindung sind der Hubzylinder und der Hubkolben an der Auflageeinheit unverdrehbar angebracht. In einer bevorzugten Ausführung ist der Hubzylinder fest an der Auflagereinheit angebracht und die Lastaufnahme ist mit dem freien Ende des Hubkolbens gekoppelt. Der Hubkolben ist im Hubzylinder unverdrehbar aufgenommen, also bspw. durch formschlüssige Aufnahme mit nicht-rundem Querschnitt. Besonders bevorzugt weist der Hubkolben mindestens einen, bevorzugt mehrere längs verlaufende Vorsprünge oder Vertiefungen auf, mit denen er formschlüssig im Hubzylinder aufgenommen ist und durch die eine Verdrehung ausgeschlossen wird.

Durch die verdrehsichere Anbringung ist sichergestellt, dass eine Verdrehung des Crawlers zur Lastaufnahme, und damit auch zur Last selbst, nur in der Kugel/Pfanne-Verbindung erfolgen kann.

Gemäß einem weiteren vorteilhaften Aspekt der Erfindung ist für diese Verdrehung ein Drehsensor (Winkelsensor) vorgesehen, um den Drehwinkel zwischen der Lastaufnahme und dem Hubkolben oder Hubzylinder zu ermitteln.

Durch den Drehsensor wird somit die Ausrichtung des Crawlers relativ zur Last ermittelt. So kann festgestellt werden, in welcher Ausrichtung die Fahrtrichtung des Crawlers relativ zur transportierten Last steht. Diese Information ist besonders wichtig bei einer automatischen Steuerung des Transports einer Last durch einen Crawler, und insbesondere durch mehrere Crawler. Der vom Drehsensor gelieferte Drehwinkel kann bspw. in einer Regelung verwendet werden, in der ein gewünschter Drehwinkel vorgegeben ist und eine Ansteuerung der Kettenantriebseinheiten so erfolgt, dass der gewünschte Drehwinkel eingestellt wird, um einen Transport der Last in dieser Richtung zu ermöglichen.

Für den Drehsensor können verschiedene Arten von Sensoren verwendet werden, insbesondere bekannte Sensortypen nach mechanischen, potentiometrischen, induktiven, kapazitiven oder optischen Messprinzipien.

Gemäß einer Weiterbildung der Erfindung ist der Drehsensor so ausgebildet, dass eine Erfassung des Drehwinkels trotz einer Schwenkbewegung zwischen dem Crawler und der Last, also auch zwischen der Lastaufnahme und dem Hubzylinder ermöglicht ist. Dabei kann der Drehsensor bspw. ein erstes und ein zweites Sensorteil aufweisen. Das erste Sensorteil ist mit dem Hubzylinder oder dem Hubkolben dreh- und schwenkfest gekoppelt, während das zweite Sensorteil mit der Lastaufnahme dreh- und schwenkfest gekoppelt ist. Das erste und zweite Sensorteil sind gegeneinander dreh- und schwenkbar. Der Sensor ist so ausgebildet, dass der Drehwinkel der Sensorteile relativ zueinander ermittelt wird, ohne die Schwenkbewegung zu behindern, und bevorzugt so, dass eine Schwenkbewegung die Ermittlung des Drehwinkels mindestens im Wesentlichen nicht beeinflusst.

Hierfür kann in einer besonders bevorzugten Ausführung mindestens ein Koppelelement vorgesehen sein, das gegenüber einem der Sensorteile schwenkfest, aber drehbar und gegenüber dem anderen Sensorteil drehfest, aber schwenkbar angeordnet ist.

Insbesondere bevorzugt ist eine kardanische Kopplung am Drehsensor. Diese stellt mit einem der beteiligten Elemente - also der Lastaufnahme oder dem Hubkolben - eine drehfeste aber schwenkbare Verbindung her, so dass eine Erfassung des Drehwinkels unabhängig von einer Schwenkbewegung erfolgen kann. Beispielsweise kann auch ein Kopplungselement an einen Sensorteil kardanisch aufgehängt sein, so dass es mit diesem drehfest, aber schwenkbar gekoppelt ist. Die letztliche Ermittlung des Sensorwertes kann bspw. erfolgen durch eine am ersten Sensorteil angeordnete Auswertungseinheit, die die relative Drehlage des ersten Sensorteils oder des Kopplungselements ermittelt, bspw. induktiv.

Bevorzugt weist die Kugel der Kugel/Pfanne-Verbindung eine formschlüssige Aufnahme in der Pfanne auf. Hierdurch wird ermöglicht, dass die Pfanne den Kugelkopf unverlierbar umgreift, d. h. so, dass aufgrund des Formschlusses ein Abheben der Pfanne vom Kugelkopf ausgeschlossen ist. Gemäß einer Weiterbildung der Erfindung wird ein derartiger Formschluss durch ein Sicherungselement, bspw. einen mehrteiligen Sicherungsring erfüllt. Hierdurch ist es zusätzlich auch möglich, dass über die Kugel/Pfanne-Verbindung nicht nur Druckkräfte beim Tragen einer Last, sondern auch Zugkräfte übertragen werden können. Die formschlüssige Aufnahme kann bspw. gewährleistet werden durch einen Kugelkopf der mehr als eine Halbkugel umfasst, also im Querschnitt einen Winkelbereich von mehr als 180°.

Dabei kann die Bewegung der Kugel/Pfanne-Verbindung ohne Rückstell- bzw. Dämpfungselement im Wesentlichen frei erfolgen, ebenso kann jedoch ein flexibles Rückstell- und/oder Dämpfungselement vorgesehen sein, das insbesondere einer Schwenkbewegung der Lastaufnahme entgegenwirkt. Dabei kann es sich um ein federndes Element handeln, das so angeordnet ist, dass es bei einer Schwenkbewegung aus der (bevorzugt waagerechten) Grundstellung heraus komprimiert wird und dabei eine entgegen der Schwenkbewegung gerichtete Kraft aufbringt. Dies kann bspw. über einen Rückstell- bzw. Dämpfungsring gewährleistet werden, der zwischen einer oberen, mit der Lastaufnahme verbundenen Fläche und einer unteren, mit dem Chassis bzw. mit dem Hubzylinder verbundenen Fläche angeordnet ist. Der Ring kann aus einem flexiblen Material, bspw. einem Elastomer bestehen. Durch ein solches Element ist sichergestellt, dass die Lastaufnahme ohne starke einwirkende Kräfte stets in Grundstellung bleibt, und dass einer Schwenkbewegung stets eine Gegenkraft entgegenwirkt.

Bevorzugt können am Crawler neben dem Drehsensor weitere Sensoren vorgesehen sein, die einerseits zur Überwachung des Betriebs und andererseits auch im Rahmen einer automatischen oder teilautomatischen Steuerung verwendet werden können. Gemäß einer Weiterbildung kann ein Lastsensor zur Ermittlung der aufliegenden Last vorgesehen sein. Der Lastsensor kann bspw. als Lastmessdose ausgebildet sein. Weiter ist bevorzugt ein Wegsensor zur Ermittlung des Hubweges vorgesehen, d. h. zur Ermittlung des Weges, um den der Hubkolben aus dem Hubzylinder ausgefahren ist.

Gemäß einer Weiterbildung der Erfindung ist am Crawler eine Steuereinheit vorgesehen. Bevorzugt handelt es sich um eine programmierbare elektronische Steuerung, bspw. mit einem Mikroprozessor und Speicher für ein Betriebsprogramm. Mit der Steuereinheit kann einerseits der Hubzylinder angesteuert werden. Andererseits ist die Steuerung der Kettenantriebseinheiten möglich, insbesondere in einer getrennten Ansteuerung, um neben Geradeausfahrten auch Kurvenfahrten oder Drehungen zu ermöglichen.

Die Steuereinheit an Bord des Crawlers ist bevorzugt programmierbar, so dass sie bspw. die Kettenantriebseinheiten und den Hubzylinder gemäß einem Steuerprogramm steuert.

Bevorzugt ist die zentrale intelligente Steuerung so programmiert, dass sie bspw. Sensordaten von einem oder mehreren an Bord befindlichen Sensoren auswertet und verarbeitet, bspw. vom Winkelsensor, von einem Lastsensor und/oder Wegsensor am Hubzylinder sowie ggf. weiteren Sensoren wie bspw. Lagesensoren, z. B. einem Neigungssensor, insbesondere für die horizontale Ausrichtung (Wasserwaage) und/oder einem Kreiselkompass sowie von Sensoren an den Kettenantriebseinheiten, bspw. Drehlzahlsensoren und/oder Druck- bzw. Durchflusssensoren zur Ermittlung der jeweiligen Fahrstellung, Fahrgeschwindigkeit etc.

Gemäß einer Weiterbildung der Erfindung weist der Crawler eine Kommunikationseinrichtung zur Übermittlung und/oder zum Empfang von Steuerungswerten, bspw. von Sollwerten oder Istwerten (Sensordaten), verschiedener Regelgrößen und/oder von Steuerkommandos auf.

Weiter bevorzugt kommuniziert die intelligente Steuerung über die Kommunikationseinrichtung, bspw. um an Bord ermittelte Sensordaten zu übertragen oder Sensordaten oder Sollwerte von extern (bspw. von einer Zentralsteuerung oder von anderen Crawlern in einem System, s. u.) zu empfangen. Über die Kommunikationseinrichtung können weiter auch Steuerkommandos übermittelt oder empfangen werden, wie nachfolgend noch näher erläutert wird. Die Kommunikationseinrichtung kann dabei im Prinzip jede Form einer drahtlosen oder kabelgebundenen elektrischen Schnittstelle sein. Bevorzugt ist sie als digitale Datenschnittstelle ausgelegt, bspw. kabelgebunden als Netzwerk-Schnittstelle (Ethernet) oder drahtlos, zum Beispiel als digitale Funk-Schnittstelle, z. B. WLAN.

Gemäß einer Weiterbildung der Erfindung ist am Crawler ein Hydrauliksystem vorgesehen. Das Hydrauliksystem umfasst mindestens eine, bevorzugt mehrere Hydraulikpumpen sowie bevorzugt einen Druckspeicher. Weiter umfasst das Hydrauliksystem bevorzugt steuerbare Ventile zum Aktivieren oder Deaktivieren verschiedener hydraulischer Aktoren. Durch das Hydrauliksystem kann insbesondere der Hubzylinder hydraulisch betrieben werden. Der Antrieb der Kettenantriebseinheiten erfolgt durch mindestens einen am Crawler angeordneten Motor, wobei im Prinzip verschiedene Arten von Motoren wie Elektromotoren oder Verbrennungsmotoren etc. in Frage kommen. Bevorzugt erfolgt der Antrieb der Kettenantriebseinheiten durch Hydraulikmotoren, die mit dem Hydrauliksystem betrieben werden. Bevorzugt wird mindestens eine Hydraulikpumpe des Hydrauliksystems mit einem Verbrennungsmotor, insbesondere Dieselmotor, weiter bevorzugt über Zwischengetriebe, angetrieben. In einer bevorzugten Ausführung treibt ein Motor über ein Verteilergetriebe mehrere separate Hydraulikpumpen, bspw. jeweils separat für die Fahrmotoren und für den Hubzylinder an, weiter bevorzugt noch eine zusätzliche Füllpumpe. Weiter ist es besonders bevorzugt, dass jede der Kettenantriebseinheiten über einen separaten Antrieb verfügt.

Gemäß einer Weiterbildung der Erfindung ist am Crawler ein Motor, insbesondere ein Verbrennungsmotor vorgesehen mit einem Schallschutzsystem. Insbesondere bevorzugt als Schallschutzsystem ist ein Gehäuse um den Motor, innerhalb dessen weiter bevorzugt eine oder mehrere Hydraulikpumpen angeordnet sein können, die bevorzugt mit einem Zwischengetriebe an den Motor gekoppelt sind. Dabei verlaufen besonders bevorzugt Hydraulikleitungen als Schläuche innerhalb des Gehäuses, die als Schallschutzelemente wirken und einen Teil des am Motor sowie an den Pumpen erzeugten Schalls aufnehmen.

Gegenstand der Erfindung ist neben dem einzelnen Crawler auch ein System und ein hiermit ausgeführtes Verfahren zum Transport von Lasten, bei dem eine Mehrzahl von Crawlern wie oben beschrieben eingesetzt werden. Dabei nehmen die Crawler gemeinsam eine zu transportierende Last auf. Dies kann direkt erfolgen, indem die zu transportierende Last an geeignet ausgewählten Unterstützungspunkten direkt mit der Lastaufnahme verbunden wird (wobei ein einfaches Aufliegen ausreicht, aber eine feste Anbringung, bspw. durch Verschraubung oder eine lösbare Verriegelung bevorzugt ist). Es ist aber auch möglich, dass die Mehrzahl von Crawlern die Last mittelbar trägt, indem die Lastaufnahmen an einem Tragrahmen oder Gerüst für die eigentliche Last angreifen. Die Anzahl der verwendeten Crawler wird dabei von Gewicht und der Geometrie der zu transportierenden Last abhängen. Bereits bei der Verwendung von nur zwei Crawlern ergibt sich durch den flexiblen Aufbau mit der dreh- und schwenkbaren Lastverbindung dabei ein vielfältig verwendbares, vorteilhaftes System. Mit drei Crawlern weist das System eine robuste, gut steuerbare Dreipunktlagerung einer Last auf. Doch auch erheblich mehr Crawler können im Verbund verwendet werden, bspw. bis zu 40 Crawler zum Transport einer extrem großen Last.

Beim erfindungsgemäßen System kommunizieren die Crawler über die Kommunikationseinrichtungen miteinander. Diese Kommunikation kann einerseits genutzt werden, um durch aufeinander abgestimmte Ansteuerung der jeweiligen Kettenantriebseinheiten eine Bewegung des Verbundes von Crawlern und damit auch der aufgenommenen Last zu bewirken, bspw. einen linearen Vortrieb, Rotation, Kurvenfahrt etc. Andererseits kann über die Kommunikation der Crawler die Lage einer an den Lastaufnahmen aufgenommenen gemeinsamen Last ausgeglichen werden. Beispiele hierfür werden nachfolgend genannt.

Ein derartiges System mit einer Mehrzahl von Crawlern kann sehr flexibel für eine große Anzahl an verschiedenen Lasten eingesetzt werden. Dabei werden an der jeweiligen Last geeignete Aufnahmepunkte zur direkten oder indirekten Aufnahme definiert. An jedem Aufnahmepunkt kann dann - je nach Traglast - entweder ein einzelner Crawler oder ein Verbund von mehreren, bspw. drei Crawlern eingesetzt werden. Beispiele hierfür werden in Verbindung mit den Ausführungsbeispielen erläutert.

Gemäß einer Weiterbildung der Erfindung werden über die Kommunikationseinrichtungen den Crawlern Ansteuerwerte für den Drehwinkel übermittelt. Die Steuerung der Crawler ist dann bevorzugt so ausgebildet, dass sie die Kettenantriebseinheiten so ansteuert, dass der Ansteuerwert des Drehwinkels an der Lastaufnahme erreicht wird. So ist durch die Vorgabe der Ausrichtung jedes Crawlers relativ zur Last ein einfaches Führen im Verbund und eine gemeinsame Bewegung möglich, bspw. für eine lineare Fahrt, bei der die Ansteuerwerte identisch vorzugeben sind, so dass die Crawler gleich ausgerichtet sind. Ebenso können die Ansteuerwerte auch in einer Weise vorgegeben sein, die eine Kurvenfahrt der Last oder eine Drehung der Last auf der Stelle ermöglicht.

Sofern die Crawler Lastsensoren für die von den Hubzylindern aufgenommenen Lasten aufweisen, kann anhand der gemessenen Lastwerte der einzelnen Crawler eine Ansteuerung der Hubzylinder so erfolgen, dass bspw. Schrägstellungen ausgeglichen werden. Falls bspw. während der Fahrt einer der Crawler durch eine Bodensenke fährt, wird es an seinem Hubzylinder zu einer Lastverringerung und an den Hubzylindern der übrigen Crawler zu einer Erhöhung kommen. Über die Kommunikationseinrichtungen können die Absolutwerte oder die Veränderungen der jeweiligen Last übermittelt werden, so dass in der Bord-Steuerung eines Crawlers, oder der Bord-Steuerung mehrer Crawler, oder bevorzugt in einer Zentralsteuerung eine Berechnung zum möglichen Ausgleich erfolgen kann, die dann bspw. durch Übermittlung von Steuerkommandos, z. B. Last-Sollwerten, über die Kommunikationseinrichtungen an die einzelnen Crawler übermittelt wird. So kann dann im dargestellten Beispiel der entlastete Crawler seinen Hubzylinder weiter ausfahren, bis ein Lastausgleich wieder erreicht ist.

Gemäß einer Weiterbildung der Erfindung ist mindestens ein Lagesensor, insbesondere für die horizontale Lage der Last vorgesehen und die Hubzylinder der Crawler werden so angesteuert, dass die Lage der Last ausgeglichen ist. Bspw. kann an der Last ein oder bevorzugt können zwei Neigungssensoren vorgesehen sein, wobei die Crawler so angesteuert werden, dass der Transport der Last auch bei geneigtem oder unebenen Untergrund stets horizontal erfolgt. Zusätzlich oder alternativ kann ein Lagesensor, d. h. insbesondere ein Neigungssensor und/oder ein Kreiselkompass auch an einem oder an mehreren der Crawler vorgesehen sein. An der Last und/oder einem oder an mehreren der Crawler können zudem weitere Sensoren vorgesehen sein, bspw. eine Windmesseinheit, um beim Transport hoher Lasten durch entsprechende Ansteuerung der Hubzylinder Windeinflüsse auszugleichen.

Bei der Benutzung des erfindungsgemäßen Systems können die Crawler einerseits vollständig unabhängig voneinander an der Last angreifen, so dass sie nur über die Last miteinander gekoppelt sind. Es ist aber auch möglich, dass die Crawler nicht die Last direkt, sondern ein Gerüst oder einen Tragrahmen tragen, oder dass zur Beibehaltung der Ausrichtung zwischen den Lastaufnahmen der Crawler Zugstreben vorgesehen sind. Im letzten Fall wäre durch die Streben kein Tragrahmen gebildet, da die Last weiterhin auf den Lastaufnahmen der einzelnen Crawler aufgenommen würde und die Zugstreben lediglich zur Ausrichtung dienen würden, ohne ihrerseits die Last zu tragen. Im Fall eines Tragrahmens oder eines Gerüsts hingegen wird die Last auf Trägern aufgenommen, die ihrerseits auf den Lastaufnahmen lagern.

Nachfolgend werden Ausführungsformen der Erfindung anhand von Zeichnungen näher beschrieben. In den Zeichnungen zeigen:
- Fig. 1: in perspektivischer Darstellung eine erste, teilweise schematisch dargestellte Ausführungsform eines Crawlers;
- Fig. 2: eine Frontansicht des Crawlers aus Fig. 1;
- Fig. 2a: eine Schnittansicht der Lastaufnahme des Crawlers aus Fig. 1, Fig. 2, wobei der Schnitt entlang der Linie A...A in Fig. 2 gezeigt ist;
- Fig. 2b: eine Schnittansicht des Hubzylinders des Crawlers aus Fig. 1, 2, wobei der Schnitt entlang der Linie B...B in Fig. 2 gezeigt ist;
- Fig. 3: eine Draufsicht auf den Crawler aus Fig. 1, Fig. 2;
- Fig. 4: eine teilweise schematische Darstellung eines Systems zum Transport einer Last mit mehreren Crawlern;
- Fig. 5a: ein System zum Transport einer Last mit neun Crawlern in Seitenansicht;
- Fig. 5b: eine symbolische Darstellung des Systems aus Fig. 5a;
- Fig. 6a-c: ein alternatives System zum Transport der Last aus Fig. 5a, 5b mit drei Crawlern und einem Tragegestell;
- Fig. 7a - d: eine zweite Ausführungsform eines Crawlers in perspektivischer Ansicht, Vorderansicht, Draufsicht und Seitenansicht;
- Fig. 8,9: perspektivische Ansichten der Lastaufnahme des Crawlers aus Fig. 7a - d mit einem Drehwinkelsensor;
- Fig. 10: in schematischer Darstellung die Draufsicht eines Systems zum Transport von Lasten mit neun Crawlern;
- Fig. 11: ein Blockdiagramm von Funktionskomponenten und der Steuerung eines Crawlers und
- Fig. 12: ein weiteres Beispiel eines Systems zum Transport einer Last mit mehreren Crawlern.

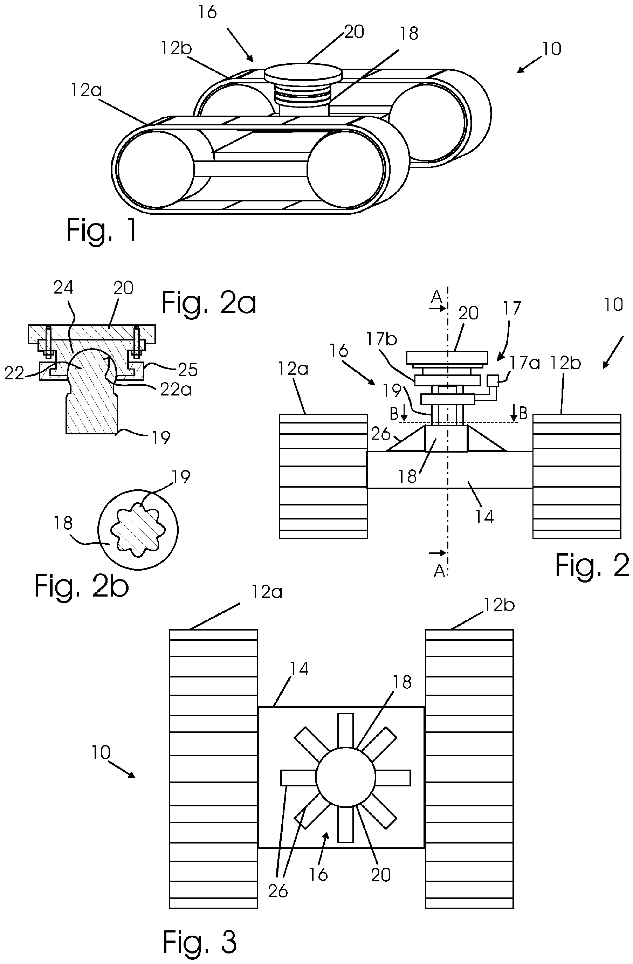

In Fig. 1 - 3 ist in vereinfachter, teilweise schematischer Darstellung der grundsätzliche Aufbau eines Crawlers 10 dargestellt. Dieser verfügt über zwei nebeneinander angeordnete Kettenantriebseinheiten 12a, 12b, die an einem Chassis 14 angeordnet sind. Auf dem Chassis 14 ist eine Auflagereinheit 16 angebracht mit einem hydraulischen Hubzylinder 18 mit ausfahrbarem Hubkolben 19 und einer an dessen Ende angebrachten Lastaufnahme 20. Der Crawler 10 ist zum Transport von schweren Lasten vorgesehen, wie nachfolgend noch im Einzelnen erläutert wird. Dabei trägt er - ggf. gemeinsam mit anderen Crawlern - die auf die Lastaufnahme 20 aufgesetzte Last.

Der Crawler 10 ist durch den Antrieb der Kettenantriebseinheiten 12a, 12b verfahrbar sowie durch getrennte Ansteuerung der Kettenantriebseinheiten 12a, 12b in seiner Fahrt steuerbar. Dabei ist die Auflagereinheit 16 zentral angeordnet, so dass bspw. bei einem gegenläufigen Betrieb der Kettenantriebseinheiten 12a, 12b eine Drehung des Crawlers 10 um die Lastaufnahme 20 herum erfolgt.

Der Hubzylinder 18 ist als Hydraulik-Zylinder ausgebildet, so dass sein Hubkolben 19 durch Beaufschlagung mit Druck ausfahrbar ist. Zum Anheben einer Last kann der Crawler 10 unter einen Lastaufnahmepunkt gefahren werden, worauf dann durch Ausfahren des Hubzylinders 18 die Aufnahme und ein Anheben der Last erfolgen.

Der Hubkolben 19 ist im Hubzylinder 18 unverdrehbar. Hierfür weist er wie in der Schnittdarstellung von Fig. 2b ersichtlich einen nicht-runden Querschnitt mit einer Anzahl von sich längs erstreckenden Ausbuchtungen auf. Der Querschnitt ist formschlüssig im Kolben 18 aufgenommen und geführt, so dass der Hubkolben 19 ein- und ausgefahren werden kann. Durch die unverdrehbare Aufnahme ist die Drehposition des Hubkolbens 19 zum Zylinder 18 und damit zum Chassis 14 und dem Rest des Crawlers 10 stets fest.

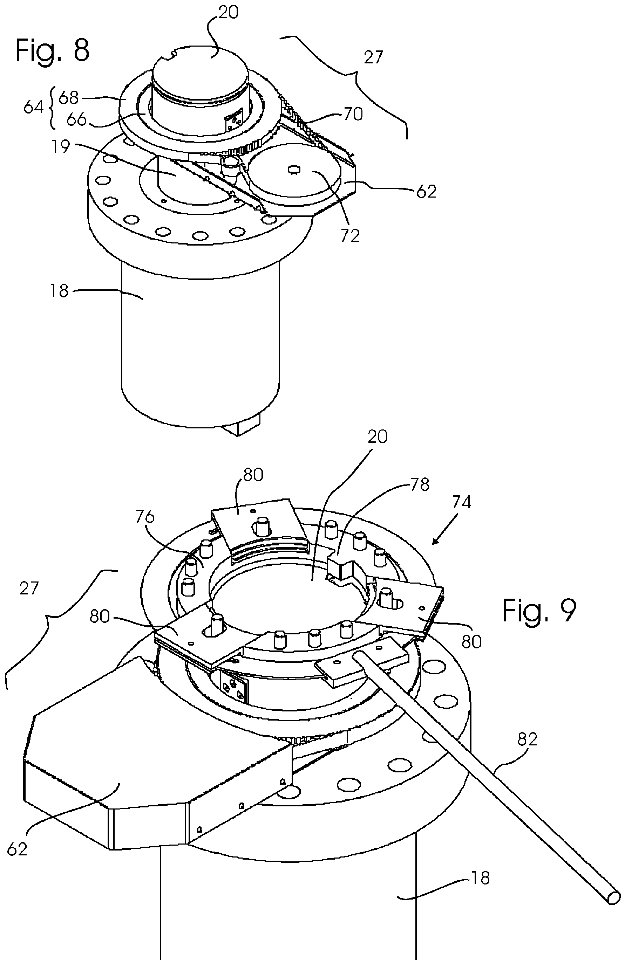

Die Kopplung zwischen dem Hubzylinder 18 mit seinem Hubkolben 19 und der Lastaufnahme 20 erfolgt über eine Kugel/Pfanne-Verbindung. Das Ende des Hubkolbens 19 weist wie in der Schnittdarstellung von Fig. 2a gezeigt eine (Teil-)Kugel 22 mit entsprechender (Teil-)Kugeloberfläche 22a auf, auf die eine hohle Pfanne 24 aufgesetzt ist. Die Lastaufnahme 20 ist eine runde Adapterplatte, die, wie nachfolgend noch im Detail erläutert wird, zur Aufnahme der Last vorgesehen ist. Dabei kann sie mit der Last durch einfache Anlage gekoppelt sein, es ist jedoch auch eine beidseitig wirkende Verbindung zur Last möglich, bspw. durch Verschraubung, Klemmung etc. Besonders bevorzugt ist eine Verriegelung der Lastaufnahme 20 an der Last, wie nachfolgend im Hinblick auf Fig. 9 erläutert wird.

Die Lastaufnahme 20 ist im gezeigten Beispiel mit der Pfanne 24 verschraubt. Zur Sicherung der Pfanne 24 am Kugelkopf 22 ist ein Sicherungsring 25 vorgesehen, der mit einem äußeren Flansch der Pfanne 24 formschlüssig gekoppelt ist und eine innere Öffnung zur Aufnahme des Kugelkopfes aufweist, wobei der Durchmesser der inneren Öffnung geringer ist als der Kugeldurchmesser. Hierdurch wird die Kugel 22 über einen Winkelbereich im gezeigten Schnitt von mehr als 180°, hier bspw. ca. 210° umschlossen. Die Kugel 22 ist so formschlüssig in dem aus dem Sicherungsring 25 und der Pfanne 24 gebildeten Verbund aufgenommen und dort gesichert.

Der Sicherungsring 25 ist als Manschette aus zwei miteinander verschraubten Halbschalen gebildet.

Durch die ineinander passende Form der Kugeloberfläche 22a und der hohlkugeligen Innenfläche der Pfanne 24 ist eine Beweglichkeit der Kugel/Pfanne-Verbindung gegeben bei gleichzeitig stets flächiger Auflage.

Durch die Kugel/Pfanne-Verbindung ist so einerseits eine Verdrehung der Lastaufnahme 20 und damit der aufgenommenen Last gegenüber dem Hubzylinder 18 und damit gegenüber dem Chassis 14 des Crawlers 10 möglich. Andererseits ist auch eine Schwenkbewegung möglich, so dass bspw. beim Transport im Fall von Bodenunebenheiten eine Schrägstellung der Kettenantriebseinheiten 12a, 12b und des Chassis 14 eintreten kann, und dennoch die Lastaufnahme 20 und damit die aufgenommene Last in waagerechter Ausrichtung verbleibt.

Da in diesem Fall neben den axialen Tragkräften am Hubzylinder 18 auch Seitenkräfte wirken, ist der Hubzylinder 18 tief im Chassis 14 eingelassen und wird zusätzlich durch einen Spannring (nicht dargestellt) unterhalb des Mittelaufbaus mit der Konstruktion verbunden. So können erhebliche Seitenkräfte aufgenommen werden, die bspw. mehr als 30 % der Gesamtauflastung entsprechen. Bevorzugt ragt der Hubzylinder 18 um weniger als 25 % seiner Hubhöhe aus dem Chassis 14 hervor.

Ein Sensor 17 ist vorgesehen, um die Drehposition der Lastaufnahme 20 relativ zum Hubkolben 19, Hubzylinder 18 und dem Rest des Crawlers 10 zu ermitteln. Der Sensor umfasst wie in Fig. 2 lediglich schematisch gezeigt ist ein erstes Sensorteil 17a, das dreh- und schwenkfest mit dem Hubzylinder 19 verbunden ist und ein gegenüber dem ersten Sensorteil 17a bewegliches zweites Sensorteil 17b, das mit der Lastaufnahme 20 dreh- und schwenkfest verbunden ist. Bei einer Drehung des Crawlers 10 gegenüber einer an der Lastaufnahme 20 aufgenommen Last erfolgt die Drehung in der Kugel/Pfanne-Verbindung, so dass sich zwischen den Sensorteilen 17a, 17b eine Drehbewegung ergibt. Dies wird vom Sensor 17 erfasst und als elektrischer Sensorwert weitergemeldet. In der konkreten Realisierung des Sensors 17 kann bspw. der zweite Sensorteil 17b als Zahnrad und der erste Sensorteil 17a als induktiver Sensor ausgebildet sein, mit dem die sich vorbei bewegenden Zähne des zweiten Sensorteils 17b gezählt werden und so ein Drehwinkel ermittelt wird. Dem Fachmann sind weitere mögliche Ausführungen von Sensoren im Prinzip bekannt; zudem wird nachfolgend noch eine weitere Ausführungsform eines Sensors 27 im Detail erläutert.

Der Crawler 10 weist - in Fig. 1 bis Fig. 3 nicht dargestellt - an Bord zwei getrennte hydraulische Antriebsmotoren für die Kettenantriebseinheiten 12a, 12b und ein Hydrauliksystem zum Betrieb der Motoren sowie zum Ausfahren des Hubzylinders 18 auf. Diese sowie alle weiteren Funktionen des Crawlers 10 werden durch eine Crawler-Steuerung 30 gesteuert.

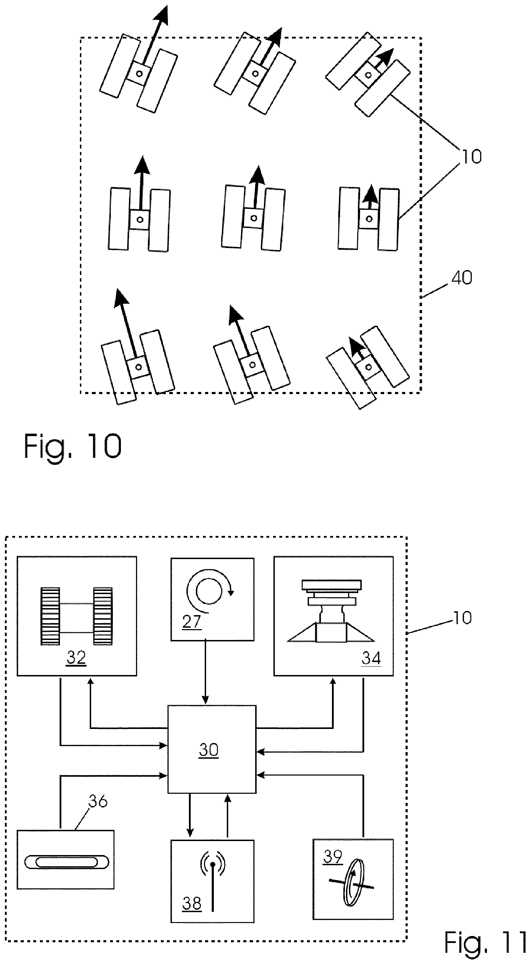

In Fig. 11 ist in Form eines Blockdiagramms die Struktur der verschiedenen Funktionseinheiten an Bord des Crawlers 10 dargestellt. Die Crawler-Steuerung 30 ist eine Mikroprozessor-Steuerung an Bord des Crawlers 10, die ein Steuerprogramm ausführt. Sie ist elektrisch verbunden mit einer Fahrsteuerung 32 für die Kettenantriebseinheiten 12a, 12b.

Die Fahrsteuerung 32 übernimmt je nach gewünschter und von der Crawler-Steuerung 30 vorgegebener Fahrweise die Ansteuerung der Kettenantriebseinheiten. Über geeignete Sensoren für die Bewegung der Kettenantriebseinheiten meldet sie die jeweilige Fahrposition sowie den zurückgelegten Weg für jede Seite zur Crawler-Steuerung 30 zurück. Die Steuerung ermittelt die Umdrehungen jedes einzelnen Antriebs und gleicht die Drehzahlen ab bzw. korrigiert diese so, dass ein Gleichlauf entsteht. Zur Korrektur des Gleichlaufs, bzw. für Kurvenfahrten, wird die Antriebsleistung der Kettenantriebseinheiten gegeneinander verändert. Dabei verarbeitet die Crawler-Steuerung 30 verschiedene Sensorsignale wie nachstehend erläutert wird, um einen vorgegebenen Fahrvektor, d. h. eine Fahrtrichtung und Fahrgeschwindigkeit einzustellen.

Weiter steuert die Crawler-Steuerung 30 eine Hubsteuerung 34 an, mit der die Hydraulikvorrichtung zum Aus- und Einfahren des Hubkolbens 19 betätigt wird. Vom Hubzylinder 18 wird über einen Sensor einerseits ein Positionssignal von einem Wegsensor für die Fahrstellung des Hubkolbens 19 und andererseits über eine Lastmessdose ein Lastsignal zur Crawler-Steuerung 30 zurückgemeldet.

Die Crawler-Steuerung 30 erhält auch das Sensorsignal des Winkelsensors 17 für die Ausrichtung des Crawlers relativ zur Last.

Weiter verarbeitet die Crawler-Steuerung 30 Sensorsignale weiterer Sensoren an Bord des Crawlers 10, bspw. zweier Neigungssensoren 36, mit dem die Position des Crawlers 10 gegenüber der Senkrechten ermittelt werden kann sowie eines Kreiselkompass 39, mit dem die Ausrichtung des Crawlers 10 feststellbar ist.

Weiter verfügt der Crawler 10 über eine Kommunikationseinrichtung 38, im gezeigten Beispiel eine drahtlose digitale Schnittstelle.

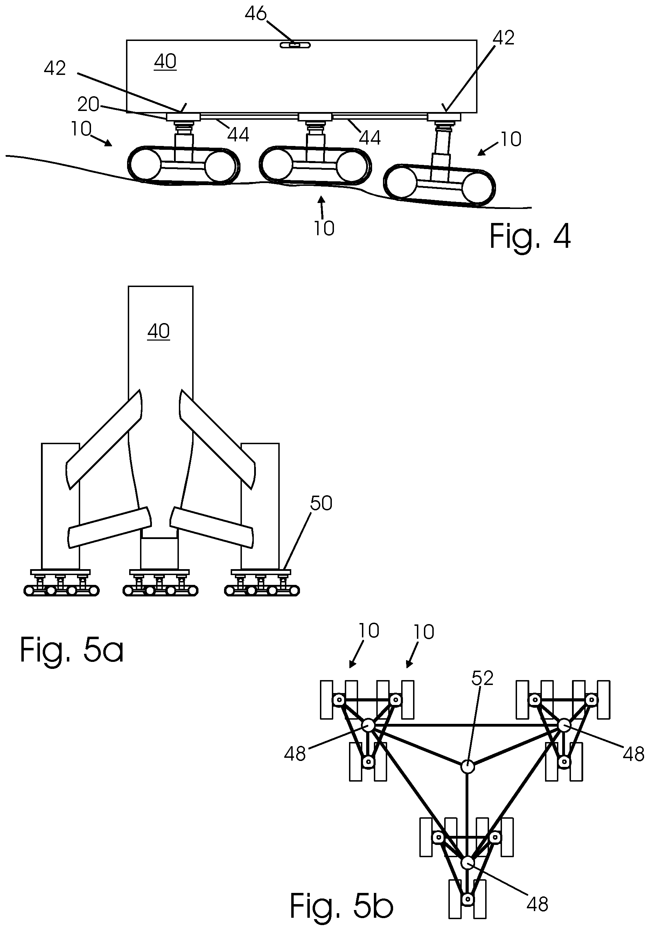

Wie nachfolgend gezeigt wird, kann eine Last 40 im Verbund mit mehreren Crawlern 10 gemeinsam aufgenommen und transportiert werden. Dabei ist jeder Crawler 10 ein autarkes Fahrzeug mit der Crawler-Steuerung 30. Innerhalb eines Verbundes wird ein Crawler 10 als Main-Crawler ausgewählt; an diesen Crawler wird eine Bedienkonsole (nicht dargestellt) angeschlossen. Die Bedienkonsole ist dabei bevorzugt in einem separaten Gerät, bspw. in einem von einem menschlichen Bediener tragbaren Handbediengerät untergebracht und steht mit der Crawler-Steuerung 30 des Main-Crawlers 10 in ständiger Datenverbindung. Die Crawler-Steuerung 30 des Main-Crawlers 10 wird dadurch zu einer Zentralsteuerung für den Verbund von Crawlern 10. Die Crawler-Steuerungen 30 der übrigen Crawler 10 sind über die Daten-Schnittstelle mit dem Main-Crawler 10 verbunden und erhalten von dort ihre Steuerbefehle. In Fig. 4 ist schematisch ein System zum Transport einer Last 40 dargestellt, bei dem beispielhaft drei Crawler 10 die Last 40 an Aufnahmepunkten 42 tragen. Dabei sind zwischen den Lastaufnahmen 20 der Crawler 10 Zugstreben 44 angeordnet, um so die Ausrichtung der Crawler 10 und der Lastaufnahmen 20 zueinander festzulegen. Die Verstrebung 44 nimmt hierbei allerdings nicht die zum Heben der Last erforderlichen Kräfte auf.

Die Last 40 ist an den Lastaufnahmen 20 der Crawler 10 aufgelagert. Durch Betrieb der Kettenantriebseinheiten werden die Crawler 10 verfahren und somit die Last transportiert. Wie in Fig. 4 schematisch dargestellt, erfolgt dabei ein Ausgleich von Unebenheiten des Fahrwegs. Einerseits ist bereits durch die große Auflagefläche der Kettenantriebseinheiten 12a, 12b ein Ausgleich kleinerer Unebenheiten gegeben - die Crawler 10 sind jeweils geländegängig und erfordern keinen speziell vorbereiteten Fahrweg. Andererseits erfolgt ein Ausgleich von Unebenheiten wie dargestellt auch durch Schwenkbewegungen der Kugel/Pfanne-Verbindung zwischen den Hubzylindern 18 der Crawler 10 und den Lastaufnahmen 20.

Bei gerader Fahrt sind dabei den Crawlern 10 feste Vorgabewerte für den Drehwinkel gegenüber der Lastaufnahme 20 vorgegeben. Im Fall von Abweichungen kann die jeweilige Steuerung 30 der Crawler den Vortrieb der Kettenantriebseinheiten so ändern, dass der gewünschte Vorgabewert erreicht wird.

Fig. 4 zeigt, wie durch Steuerung der Hubzylinder 18 die stets waagerechte Transportlage der Last 40 auch bei Neigungen des Fahrwegs erreichbar ist. Hierbei ist an der Last 40 ein Neigungssensor 46 angebracht. Das Signal des Neigungssensors 46 wird von der Zentralsteuerung (nicht dargestellt) ausgewertet. Die Zentralsteuerung kommuniziert mit den Crawlern 10 dabei über die Schnittstelle 38 und sorgt so dafür, dass die Hubzylinder 18 gemeinsam so angesteuert werden, dass die Last 40 ausgerichtet bleibt.

Durch Kommunikation zwischen den Crawlern 10 erfolgt auch ein automatischer Lastausgleich zwischen den Hubzylindern 18. Dabei erfassen wie bereits erwähnt Lastmessdosen an jedem der Hubzylinder 18 die jeweilige Last und melden diese an die Crawler-Steuerung 30 eines jeden Crawlers 10. Über das Interface 38 werden diese Daten untereinander ausgetauscht. Fährt bspw. in Fig. 4b während des Transports einer der beteiligten Crawler 10 durch eine Bodensenke, so wird die Entlastung seines Hubzylinders 18 unmittelbar festgestellt und es wird eine Ansteuerung vorgegeben, die dieser Entlastung entgegenwirkt, so dass der Hubzylinder 18 ausgefahren wird, bis ein Lastausgleich erreicht ist.

Fig. 5a, 5b zeigen beispielhaft den Transport einer sehr schweren Last 40, im gezeigten Beispiel eines Tripoden für eine Offshore-Windkraftanlage. Diese Transportaufgabe wird durch einen Verbund von Crawlern 10 gelöst. Dabei wird an jedem der drei Beine des Tripoden 40 ein Lastaufnahmepunkt 48 (Fig. 5b) festgelegt. Die Last dieses Lastaufnahmepunktes 48 wird dabei jeweils auf drei Crawler 10 verteilt, indem ein Tragrahmen 50 untergelegt wird, an dem die Lastaufnahmen 20 der Crawler 10 angreifen.

An der Last 40 ist dabei ein zentraler Punkt 52 festgelegt, der für die aus den Crawlern 10 und der Last 40 gebildete Einheit stets als Bezugspunkt verwendet wird.

Für den Transport wird der Tripode 40 zunächst am Herstellungsort aufrecht positioniert, wobei die Hubrahmen 50 auf Stützen abgestellt sind. Dann werden die Crawler 10 herangeführt und unterhalb der Hubrahmen 50 positioniert. Auf den Ansteuerbefehl der Zentralsteuerung hin steuern die jeweiligen Crawler-Steuerungen 30 der Crawler 10 die Hubzylinder 18 so an, dass die Hubrahmen 50 an den Lastaufnahmen 20 aufgenommen und schließlich die gesamte Last 40 angehoben wird.

Die so angehobene Last wird nun durch Verfahren der Crawler 10 zum Zielort transportiert. Dabei gibt die Zentralsteuerung die Fahrtrichtung vor. In der Zentralsteuerung ist die Anordnung der Crawler 10 unterhalb der Last 40 gespeichert. Für einen gewünschten Vortrieb der Last 40 gibt die Zentralsteuerung jedem Crawler 10 einen Fahrbefehl, der über die Schnittstelle 38 übermittelt wird. Der Fahrbefehl enthält dabei für jeden Crawler 10 einen Vorgabewert für den Drehwinkel relativ zur Lastaufnahme, d. h. eine Richtung, in der sich der Crawler dann automatisch relativ zur Last ausrichtet.

Im Fall der linearen Fortbewegung bei entsprechend ausgerichteten Crawler-Einheiten, wie bspw. in Fig. 5b gezeigt, werden die Crawler 10 dabei jeweils gleich angesteuert, so dass sie sich alle linear in gleicher Richtung bewegen und die Last so transportieren.

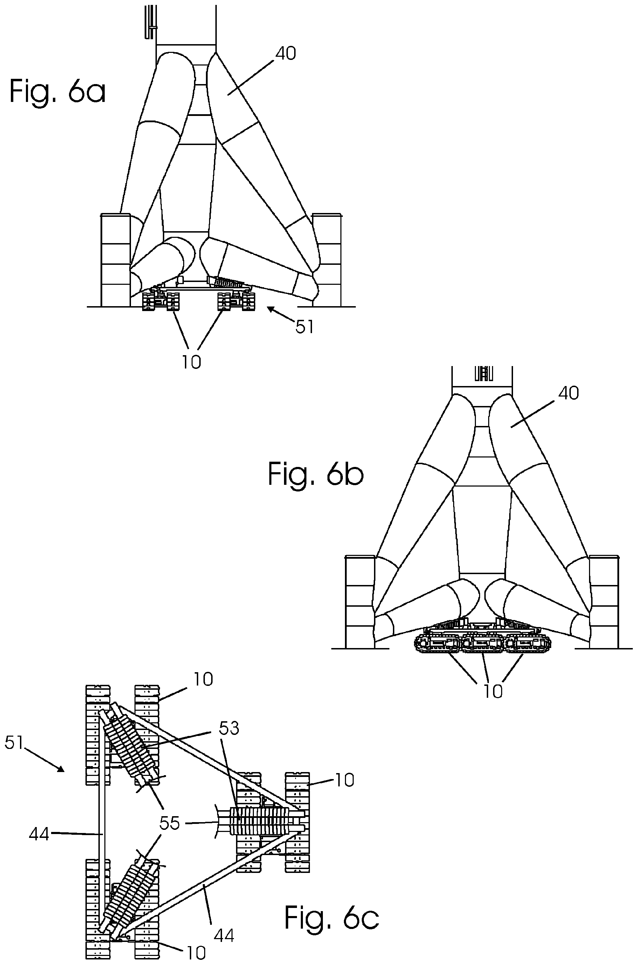

In Fig. 6a - 6c ist alternativ ein System zum Transport des Tripoden 40 dargestellt, das mit nur drei Crawlern 10 auskommt. Hierbei ist ein Traggestell 51, wie insbesondere in Fig. 6c genauer dargestellt ist, zentral unterhalb des Tripoden 40 positioniert. Das Traggestell 51 ist gebildet aus einem Dreieck von Zugstreben 44, wobei an jeder Ecke des Dreiecks eine spezielle Auflagerkonstruktion 53 angeordnet ist. Jede der Auflagerkonstruktionen 53 dient einerseits als Träger zur Auflage von Querstreben des Tripoden 40 wie in Fig. 6a, 6b gezeigt und ist andererseits auf Druck zwischen den Ecken des Dreiecks und dem zentralen Träger des Tripoden 40 angeordnet, stützt sich also mittig jeweils durch Stützen 55 an diesem ab.

Unterhalb jedes Lastauflagepunktes an den Auflagerkonstruktionen 53 ist ein Crawler 10 angeordnet. So tragen die in Fig. 6a - 6c gezeigten drei Crawler 10 zusammen die Last 40. Aufgrund der so gebildeten Dreipunkt-Lagerung ist der Verbund stabil und gut steuerbar, wobei zum Bewegen der Last 40 die Crawler 10 zur gleichförmigen Fahrt angesteuert werden.

Neben der reinen linearen Fahrt sind aber auch deutlich komplexere Fahrmanöver mit einem Verbund von Crawlern möglich. Fig. 10 zeigt beispielhaft einen Verbund von neun Crawlern 10 unterhalb einer Last 40. Jedem Crawler 10 wird dabei von der Zentralsteuerung ein individueller Geschwindigkeitsvektor vorgegeben, d. h. eine Fahrtrichtung und Fahrgeschwindigkeit. Die Fahrtrichtung wird dabei als Drehwinkelwert relativ zur Lastaufnahme vorgegeben, der mittels des Winkelsensors 17 überprüft und eingeregelt wird. Die Crawler-Steuerung 30 jedes Crawlers 10 führt den entsprechenden Fahrbefehl aus, indem sie durch unterschiedliche Ansteuerung der Kettenantriebseinheiten die Drehung in die gewünschte Fahrtrichtung ausführt und durch Gleichlauf der Kettenantriebseinheiten anschließend den Vortrieb mit der vorgegebenen Geschwindigkeit bewirkt. So wird bspw. bei dem in Fig. 10 symbolisch dargestellten Muster insgesamt durch die Last 40 ein Bogen mit einer Rechtsdrehung beschrieben.

Bei der Steuerung bspw. des Verbundes aus Fig. 5a, 5b ist der oberste Lastpunkt 52 der Bezugspunkt für den gesamten Verbund. Alle Positioniervorgänge beziehen sich auf diesen Punkt. Ein Bediener mit einer Bedienkonsole (verbunden mit der Zentralsteuerung) gibt die Fahrbefehle für den Transport der Last 40 jedoch ausgehend von seinem i. d. R. hiervon verschiedenen Standpunkt vor. Die Zentralsteuerung übernimmt entsprechend der geometrischen Anordnung der jeweiligen Crawler 10 die Transformation der Fahrbefehle. Der Bediener gibt über die Bedienkonsole Geschwindigkeit und Richtung (Geschwindigkeitsvektor) für den Transport der Last, bezogen auf seinen Standpunkt vor. Die Zentralsteuerung übernimmt die Transformation dieses Vektors in das Bezugssystem des obersten Lastpunktes 52 und berechnet die für die Umsetzung notwendigen Richtungsvektoren für die Lastpunkte der nächsten Ebene. Anschließend werden jeweils für diese Lastpunkte die Richtungsvektoren der Lastpunkte der darunterliegenden Ebene berechnet. Dieses Verfahren setzt sich fort bis die Lastaufnahmen 20 der Crawler 10 erreicht sind. Die für die Lastaufnahmen 20 berechneten Geschwindigkeitsvektoren werden an die jeweiligen Crawler-Steuerungen 30 der Crawler 10 übermittelt, die die Positionieranforderungen dann ausführen.

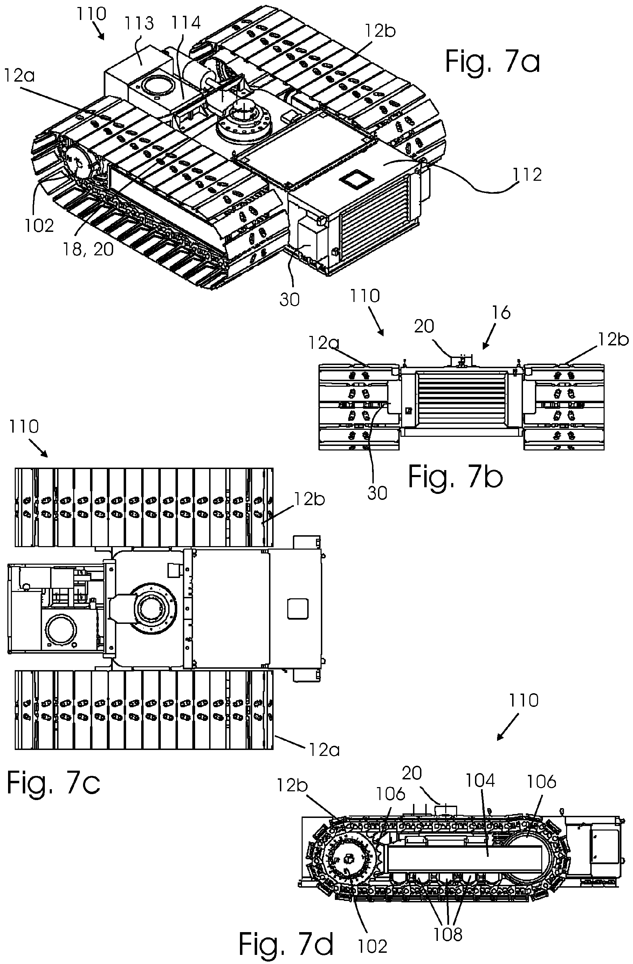

In Fig. 7a - 7d ist als zweite Ausführungsform eine konkrete Realisierung eines Crawlers 110 dargestellt. Dabei werden mit der ersten Ausführungsform eines Crawlers 10 übereinstimmende Elemente mit gleichen Bezugszeichen dargestellt und werden nachstehend nicht noch einmal gesondert erläutert.

Der Crawler 110, bei dem in Fig. 7a - 7d von der Auflagereinheit 16 nur die Hubeinheit mit dem Hubzylinder 18 mit der am Ende des Hubkolbens 19 angeordneten Lastaufnahme 20 dargestellt ist, ist zur Aufnahme von Lasten von bspw. bis zu 320 t ausgelegt. Der Crawler weist eine Länge von etwa 4,8 m und eine Breite von 3,14 m auf, mit einer Spurbreite der Kettenantriebseinheiten 12a, 12b von 60 cm.

Der Hubzylinder 18 ist vollständig in das Chassis integriert und kann selbst im ausgefahrenen Zustand noch bis zu 30 % Seitenkräfteaufnehmen. Im Beispiel des Crawlers mit bis zu 320 t Auflastung ist so eine Seitenkraftaufnahme von bis zu 90 t möglich.

In Fig. 8 ist separat der Hubzylinder 18 und Kolben 19 mit der Lastaufnahme 20 dargestellt. Dabei weist (in Fig. 8 nicht dargestellt) der Kolben 19 wie bei der oben beschriebenen generellen Ausführung gezeigt einen Kugelkopf 22 auf, der in einer mit der Lastaufnahme 20 verschraubten Pfanne 24 zur Bildung einer Kugel/Pfanne-Verbindung aufgenommen und durch einen Sicherungsring 25 formschlüssig gesichert ist. So können zwischen den Hubkolben 19 und der Lastaufnahme 20 Dreh- und Schwenkbewegungen ausgeführt werden.

In Fig. 8 ist eine Ausführungsform eines Drehsensors 27 zur Ermittlung des Drehwinkels zwischen dem Hubkolben 19 und der Lastaufnahme 20 mit teilweise offenem Gehäuse 62 gezeigt. Das Gehäuse 62 ist mit dem Hubkolben 19 schwenk- und drehfest verbunden.

An der Lastaufnahme 20 ist eine kardanische Kopplung 64 angebracht mit einem inneren Ring 66 und einem äußeren Ring 68. In für kardanische Kopplungen an sich bekannter Weise ist dabei der innere Ring gegenüber der Lastaufnahme 20 um eine horizontale erste Achse schwenkbar, dabei aber drehfest angebracht. Der äußere Ring 68 ist wiederum an dem inneren Ring 66 um eine zweite horizontale Achse schwenkbar angeordnet, die zur ersten horizontalen Achse unter 90 Grad angeordnet ist. Somit ist der äußere Ring 68 ebenfalls drehfest mit der Lastaufnahme 20 gekoppelt, folgt also jeder Drehbewegung. Der äußere Ring 68 ist schwenkfest mit dem Sensorgehäuse 62 verbunden.

Innerhalb des Sensorgehäuses 62 ist der äußere Ring 68 über einen Zahnriemen 70 mit einer Drehscheibe 72 gekoppelt.

Für eine Ermittlung der Drehposition der Lastaufnahme 20 gegenüber dem Hubkolben 19, unabhängig von Schwenkbewegungen, ist somit nur die Feststellung der Drehposition der Drehscheibe 72 gegenüber dem Sensorgehäuse 62 zu ermitteln. Dies wird im bevorzugten Beispiel gewährleistet durch einen induktiven Drehsensor an einem Ritzel unterhalb der Drehscheibe 72 (nicht dargestellt). Ebenso können, nachdem durch die Kopplung über die kardanische Verbindung 64 und den Zahnriemen 70 der Einfluss von Schwenkbewegungen eliminiert ist, an dieser Stelle auch an sich bekannte Winkelsensoren anderen Typs eingesetzt werden.

Wie zuvor erläutert kann die Lastaufnahme 20 eine Last 40 durch reines Aufliegen, d. h. ohne feste, insbesondere beidseitig wirkende Verbindung aufnehmen. In einer besonders bevorzugten Ausführung wird, wie in Fig. 9 gezeigt, an der Last oder einem Traggestell 50, 51 eine Aufnahmevorrichtung 74 für die Lastaufnahme 20 gebildet.

Die Aufnahmevorrichtung 74 umfasst einen Ring 76 mit einem Vorsprung 78, der in eine entsprechende Nut der Lastaufnahme 20 eingreift und somit die Ausrichtung der Lastaufnahme 20 innerhalb des Rings 76 sichert. Die Aufnahmevorrichtung 74 wird an der Last 40 oder an einem Tragrahmen 50 befestigt. Zur Verbindung mit der Lastaufnahme 20 wird diese von unten in den Ring 76 eingefahren und dann unter Betätigung eines Verriegelungsmechanismus, im gezeigten Beispiel gebildet durch radial verschiebliche Riegelelemente 80 betätigbar durch eine Betätigungsstange 82, innerhalb des Rings 76 verriegelt. Durch die Aufnahme in den Ring 76 können auch Seitenkräfte gegenüber der Last 40 aufgebracht werden. Aufgrund der Verriegelung durch die Riegelelemente 80 können zudem Zugkräfte aufgebracht werden, so dass es bspw. möglich ist, den gesamten Crawler 10 durch Einfahren des Hubkolbens 19 anzuheben.

Die Kettenantriebseinheiten 12a, 12b umfassen jeweils Fahrschiffe 104 mit endseitig angeordneten Kettenrädern 106, von denen jeweils eines durch einen Hydraulikmotor 102 angetrieben ist. Unterhalb der Fahrschiffe 104 sind Rollen 108 vorgesehen. Eine Fahrkette 110 ist um die Kettenräder 106 und die Rollen 108 gelegt.

Das Chassis 14 auf den beidseitigen Fahrschiffen 104 abgestützt, so dass die an der Auflagereinheit 16 aufgenommenen Kräfte vom Chassis zu den Fahrschiffen 104 der Kettenantriebseinheiten 12a, 12b geleitet werden, die sich über die Fahrrollen 108 gegenüber der Kette 110 und damit gegenüber dem Untergrund abstützen. So ist eine Struktur mit hoher Tragfähigkeit geschaffen, bei der die an der Lastaufnahme aufgenommenen Kräfte gut auf die Fahrfläche der Kette 110 verteilt werden.

Zum Antrieb verfügt der Crawler 110 über einen zentralen Dieselantrieb. Dieser ist angeordnet in einem Power-Pack Gehäuse 112. Ein Sechs-Zylinder-Motor (nicht separat dargestellt) treibt über ein ebenfalls im Gehäuse 112 angeordnetes Verteilergetriebe separate Hydraulikpumpen innerhalb des Gehäuses 112 an, mit denen einerseits der Hubzylinder 18 versorgt und andererseits die Hydraulikantriebe 102 der Kettenantriebseinheiten 12a, 12b in einem geschlossenen Antriebssystem angetrieben werden. An Bord ist ein Hydrauliktank 114 vorgesehen. Weiter ist an Bord auch ein Treibstofftank 113 vorgesehen, so dass der Crawler 110 vollständig autark ist.

Mit einer an Bord vorgesehenen Steuerung 30 wird über die Ansteuerung von Ventilen der von den Hydraulikpumpen erzeugte Druck den Hydraulikmotoren 102 der Kettenantriebseinheiten 12a, 12b sowie dem Hubzylinder 18 geregelt zugeführt. So wird durch gezielte Ansteuerung der Motoren 102 eine Fahrsteuerung bewirkt.

Die Steuerung 30 an Bord ist als Rechner mit Mikroprozessor und Programm- sowie Datenspeicher ausgebildet, auf dem ein Steuerprogramm abläuft, mit dem die beschriebenen Steuer- und Regelungsfunktionen, Abfrage der Sensoren, Kommunikation mit anderen Steuerungen und/oder einer Kopfsteuerung, und die Ansteuerung der aktiven Einheiten an Bord in Echtzeit erfolgen.

Im Programmspeicher sind Fahrprogramme gespeichert, die jeweils das Verhalten jedes einzelnen Crawlers 10 innerhalb des Verbundes steuern. Für unterschiedliche Transportaufgaben und Konstellationen von Crawlern sind dabei einzelne Programme vorgesehen, die geeignet ausgewählt werden können. Dabei ist stets eine Änderung der Fahrprogramme möglich, bspw. durch Einlesen von CAD-Daten des jeweiligen Verbundes. Dabei ist in der Steuerung 30 die Position des jeweiligen Crawlers innerhalb des Verbundes mit anderen Crawlern 110 an der gemeinsamen Last 40 gespeichert. Die Steuerung verfügt somit über die Daten zur relativen Positionierung des Crawlers gegenüber den Bezugspunkten 48, 52 der Last 40. Abhängig von der Relativposition und Ausrichtung, zu messen über den Drehwinkel an der Lastaufnahme, kann die Steuerung somit den jeweils gewünschten Geschwindigkeitsvektor für den über die Kettenantriebseinheiten 12a, 12b bewirkten Vortrieb ermitteln.

Dabei verfügt die Steuerung einerseits über vorgespeicherte Datensätze zum Betrieb im Verbund mit anderen Crawlern 110 entsprechend verschiedener Konstellationen, d. h. Anzahl und/oder Anordnung von Crawlern 110. Andererseits ist das Betriebsprogramm bevorzugt lernfähig ausgebildet, so dass anhand von gemessenen und/oder über die Kommunikationsschnittstelle 38 übermittelten Parametern auch andere als die zunächst vorgespeicherten Konfigurationen verwendet werden können.

Zusammengefasst erfüllt die Steuerung 30 an Bord jedes Crawlers die folgenden Funktionen:
- Überwachung der Position und Ausrichtung des Crawlers in der Ebene (dies wird insbesondere über die Auswertung des Drehsensors 27 gegenüber dem vorgegebenen Geschwindigkeitsvektor sowie die Ansteuerung der Kettenantriebseinheiten 12a, 12b ggf. überwacht durch Radsensoren gewährleistet, unterstützend können zusätzliche Sensoren und Funktionen wie bspw. Kreiselkompass, GPS-Ortung, etc. verwendet werden),
- Überwachung der Neigung des Crawlers (mittels Lagesensoren),
- Überwachung der vom Crawler individuell getragenen Last (mittels Lastmessdose am Hubzylinder 18),
- Überwachung und Regelung des individuellen Niveaus des Lastaufnahmepunktes im Verhältnis zu allen anderen Crawlern des Verbundes (dies wird durch Wegsensoren am Hubzylinder 18 sichergestellt, wobei durch Kommunikation über die Schnittstelle 38 die Werte mit anderen Crawlern ausgetauscht werden),
- Fähigkeit, einen von einer zentralen Steuerung übergebenen Fahrvektor (Richtung, Fahrgeschwindigkeit) in entsprechende Fahrbewegungen umzusetzen und die Umsetzung zu überwachen,
- Überwachung der Einhaltung eigener physischer Grenzen, bspw. der maximalen Hubhöhe, der maximalen Last, der maximalen Geschwindigkeit oder Neigung.

Die Zentralsteuerung für einen Verbund von Crawlern 10 ist im Hinblick auf die Auslegung der Verbundstruktur, d. h. die Lage der Lastaufnahmepunkte der einzelnen Crawler im Verbund programmierbar. Unterschiedliche Verbundstrukturen für unterschiedliche Anwendungsfälle können dabei gespeichert und für die jeweilige Anwendung abgerufen werden. Die Steuerung erfolgt bevorzugt über ein von einem Bediener tragbares Gerät, bei dem die Fahrbefehle (Geschwindigkeit, Richtung) des gesamten Verbundes bevorzugt über einen Steuerknüppel vorgegeben werden und der Bediener über Anzeigen Rückmeldungen erhält.

Die Zentralsteuerung leistet hierfür eine ständige Berechnung und Überwachung des von jedem Crawler 10 des Verbundes auszuführenden Fahrvektors während der Verbundfahrt. Im Fall von erkannten Störungen löst die Zentralsteuerung den sofortigen Stopp aller Crawler aus. Zusätzlich kann die Zentralsteuerung mittlere Windgeschwindigkeiten und - richtungen überwachen und durch entsprechende entgegengerichtete Neigung der Last, herbeigeführt über die individuelle Hubhöhe an den Crawlern, ausgleichen. Wie bereits erläutert kann die Zentralsteuerung an Steigungen eine Nivellierung der Last durch individuelle Steuerung der Lastaufnahmen an den einzelnen Crawlern vorgeben.

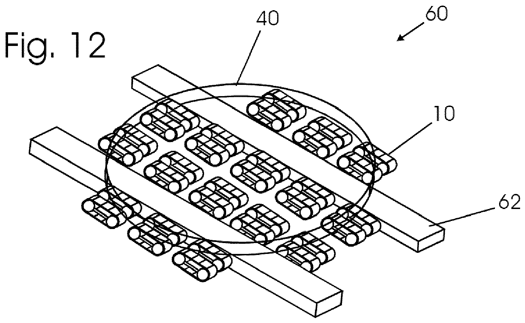

Fig. 12 zeigt ein weiteres Beispiel eines Verbundes von Crawlern 10 zum Transport eines scheibenförmigen Betonfundaments (das in Fig. 12 zur besseren Übersicht lediglich ringförmig dargestellt ist).

Bei dem in Fig. 12 gezeigten Verbund 60 sind sechzehn Crawler 10 vorgesehen, um das scheibenförmige Fundament 40 zunächst von Absetzfundamenten 62 anzuheben, es dann zum Bestimmungsort zu transportieren und dort schließlich auf ähnlichen Absetzfundamenten wieder abzusetzen.

Dabei können - wie schematisch in Fig. 12 gezeigt - die insgesamt sechzehn Crawler 10 die Last 40 ohne jedes Traggestell direkt tragen. Hierzu werden die Crawler 10 in der gezeigten Konstellation unterhalb der Last 40 positioniert. Auf den Lastaufnahmen 20 ist dabei jeweils lediglich eine Gummischeibe aufgesetzt, um einen besseren Halt der Last zu gewähren. Optional können die Lastaufnahmen 20 durch Zugstreben (in Fig. 12 nicht dargestellt) verbunden werden.

Durch die beschriebene Zentralsteuerung und die individuellen Crawler-Steuerungen werden die Hubzylinder der Crawler 10 dann so angesteuert, dass die Lastaufnahmen 20 von unten gegen die Last 40 gefahren werden und diese so angehoben wird. Danach kann die Last 40 durch Steuerung des Verbundes 60 frei verfahren und schließlich am Zielort abgelegt werden.

Die Erfindung ist nicht auf die vorstehend beschriebenen Ausführungsformen beschränkt; diese sind vielmehr beispielhaft zu verstehen. So wird insbesondere die Anzahl und die Anordnung von Crawlern 10, 110 in einem Verbund stark von der Art der jeweiligen Last abhängen. Das erfindungsgemäße System zeichnet sich dabei gerade durch die vielfältigen Einsatzmöglichkeiten und flexible Verwendung derselben Crawler in unterschiedlichen Konfigurationen aus.

Bspw. kann ein Verbund von Crawlern zum Transport von Kontergewichten eines Krans verwendet werden. In diesem Fall ist es bevorzugt, dass die Crawler 10, 110 mit der Last 40 an der Lastaufnahme 20 nicht nur durch einseitige Auflage verbunden sind, sondern dass durch feste Verbindung, bspw. Verschraubung eine auch auf Zug beanspruchbare Verbindung geschaffen ist. Dann kann die zu transportierende Last, bspw. Kontergewicht, am Einsatzort auf einer Aufnahme bzw. einem Gestell abgesetzt werden und die Crawler 10, 110 können durch Einziehen des Hubzylinders 18 eingezogen bzw. angehoben werden.

Verschiedene andere Abweichungen von dem beschriebenen Ausführungsformen sind möglich. Generell sind die hier gezeigten Beispiele so zu verstehen, dass die beschriebenen Eigenschaften und Elemente der jeweiligen Ausführungsformen miteinander in verschiedenen Kombinationen verwendet werden können, wohingegen andere Elemente weggelassen werden können. Auch die Merkmale von nicht direkt aufeinander bezogenen Ansprüchen können durchaus in sinnvoller Kombination miteinander verwendet werden.

## Patentansprüche

1. Crawler zum Transport von Lasten mit mindestens
- zwei Kettenantriebseinheiten (12a, 12b),
- einer Auflagereinheit (16) zwischen den Kettenantriebseinheiten (12a, 12b),
- wobei die Auflagereinheit eine Lastaufnahme (20) für eine zu transportierende Last (40) und einen Hubzylinder (18) mit einem Hubkolben (19) zur Höhenverstellung der Lastaufnahme (20) aufweist,
- wobei der Hubzylinder und der Hubkolben (19) an der Auflagereinheit (16) unverdrehbar angebracht sind,
- und wobei die Lastaufnahme (20) über eine Kugel/Pfanne-Verbindung (22, 24) so mit dem Hubzylinder (18) gekoppelt ist, dass eine Dreh- und Schwenkbewegung zwischen der Lastaufnahme (20) und der Auflagereinheit (16) möglich ist,
- und ein Drehsensor (17, 27) vorgesehen ist, um einen Drehwinkel zwischen der Lastaufnahme (20) und dem Hubkolben (19) oder Hubzylinder (18) zu ermitteln.

2. Crawler nach Anspruch 1, bei dem
- der Hubkolben (19) formschlüssig mit nicht-rundem Querschnitt im Hubzylinder (18) aufgenommen ist.

3. Crawler nach einem der vorangehenden Ansprüche, bei dem
- der Drehsensor (17, 27) ein erstes Sensorteil (17a, 62) aufweist, das mit dem Hubzylinder (18) oder dem Hubkolben (19) dreh- und schwenkfest gekoppelt ist,
- und ein zweites Sensorteil (17b), das mit der Lastaufnahme dreh- und schwenkfest gekoppelt ist,
- wobei das zweite Sensorteil (17b) gegenüber dem ersten Sensorteil (17a, 62) dreh- und schwenkbar angeordnet ist,
- wobei der Drehsensor (17, 27) den Drehwinkel zwischen dem ersten Sensorteil (17a, 62) und dem zweiten Sensorteil (17b) ermittelt.

4. Crawler nach Anspruch 3, bei dem
- ein Kopplungselement (68) vorgesehen ist, das gegenüber einem Sensorteil (62) schwenkfest aber drehbar und gegenüber dem anderen Sensorteil drehfest aber schwenkbar angeordnet ist.

5. Crawler nach einem der vorangehenden Ansprüche, bei dem
- der Drehsensor (27) eine kardanische Kopplung (64) aufweist, um unabhängig von Schwenkbewegungen der Kugel/Pfanne Verbindung (22, 24) den Drehwinkel zu erfassen.

6. Crawler nach einem der vorangehenden Ansprüche, bei dem
- die Kugel/Pfanne-Verbindung ein Sicherungselement (25) zur formschlüssigen Aufnahme der Kugel aufweist.

7. Crawler nach einem der vorangehenden Ansprüche, bei dem
- der Hubzylinder (18) einen Lastsensor zur Ermittlung der aufliegenden Last
- und/oder einen Wegsensor zur Ermittlung des Hubweges aufweist.

8. Crawler nach einem der vorangehenden Ansprüche, bei dem
- eine Steuereinheit vorgesehen ist zur getrennten Ansteuerung der Kettenantriebseinheiten (12a, 12b) und zur Ansteuerung des Hubzylinders (18).

9. Crawler nach Anspruch 8, bei dem
- die Steuereinheit mit dem Drehsensor (27) und/oder einem Hubsensor und/oder einem Wegsensor verbunden ist.

10. Crawler nach einem der vorangehenden Ansprüche, bei dem
- ein Hydrauliksystem mit einer Hydraulikpumpe vorgesehen ist,
- und an den Kettenantriebseinheiten (12a, 12b) jeweils ein Fahrmotor als Hydraulikmotor vorgesehen ist,
- wobei mit dem Hydrauliksystem die Fahrmotoren und der Hubzylinder betrieben werden.

11. System zum Transport von Lasten mit
- einer Mehrzahl von Crawlern (10) nach einem der vorangehenden Ansprüche,
- die eine gemeinsame an den Lastaufnahmen (20) aufgenommene Last (40) transportieren,
- mit Kommunikationseinrichtungen (38) um zwischen den Crawlern (10) untereinander und/oder zwischen den Crawlern (10) und einer Kopfsteuerung Sensorwerte und/oder Steuerungskommando zu übermitteln.

12. System nach Anspruch 11, bei dem
- den Crawlern (10) Ansteuerwerte für den Drehwinkel übermittelt werden,
- wobei die Steuerung der Crawler (10) so ausgebildet ist, dass sie die Kettenantriebseinheiten (12a, 12b) so ansteuert, dass der Ansteuerwert des Drehwinkels an der Lastaufnahme (20) erreicht wird.

13. System nach einem der Ansprüche 11, 12 bei dem
- die Crawler (10) einen Lastsensor für die Last der Hubzylinder (18) aufweisen,
- und die Hubzylinder (18) so angesteuert werden, dass Lastschwankungen ausgeglichen werden.

14. System nach einem der Ansprüche 11-13, bei dem
- ein Lagesensor (46) für die Last (40) vorgesehen ist,
- wobei die Hubzylinder (18) der Crawler (10) so angesteuert werden, dass die Lage der Last (40) ausgeglichen wird.

15. Verfahren zum Transport von Lasten, bei dem
- eine Last (40) gemeinsam an den Lastaufnahmen (20) einer Mehrzahl von Crawlern (10) nach einem der Ansprüche 1-8 aufgenommen wird,
- und den Crawlern (10) Steuerungskommandos übermittelt werden, um die Last (40) durch gemeinsame Ansteuerung der Kettenantriebseinheiten (12a, 12b) zu transportieren.

## Claims

1. A crawler for transporting loads with at least
- two chain drive units (12a, 12b),
- a bearing unit (16) between the chain drive units (12a, 12b),
- wherein the bearing unit has a load bearing (20) for a load to be transported (40) and a hoist cylinder (18) having a piston (19) for adjusting the height of the load bearing (20),
- wherein the hoist cylinder and the piston (19) are mounted to the bearing unit (16) in a rotationally locked manner
- and wherein the load bearing (20) is coupled to the hoist cylinder (18) by way of a ball and socket connection (22, 24) such that a rotational and swivel movement between the load bearing (20) and the bearing unit (16) is possible,
- and a rotary sensor (17, 27) is provided in order to determine an angle of rotation between the load bearing (20) and the piston (19) or hoist cylinder (18).

2. The crawler according to claim 1, in which
- the piston (19) is received in the hoist cylinder (18) in a form-fitting manner with a non-round cross-section.

3. The crawler according to one of the preceding claims, in which
- the rotary sensor (17, 27) has a first sensor part (17a, 62), which is coupled with the hoist cylinder (18) or the piston (19) in a torque- and swivel-proof manner,
- a second sensor part (17b), which is coupled with the load bearing in a torque- and swivel-proof manner,
- wherein the second sensor part (17b) is arranged in a torque- and swivel-proof manner with respect to the first sensor part (17a, 62),
- wherein the rotary sensor (17, 27) determines the angle of rotation between the first sensor part (17a, 62) and the second sensor part (17b).

4. The crawler according to claim 3, in which
- a coupling element (68) is provided, which is arranged in a swivel-proof but rotatable manner with respect to a sensor part (62) and in a torque-proof but swivelling manner with respect to the other sensor part.

5. The crawler according to one of the preceding claims, in which
- the rotary sensor (27) has a cardanic coupling (64), in order to capture the angle of rotation independently of swivel movements of the ball and socket connection (22, 24).

6. The crawler according to one of the preceding claims, in which
- the ball and socket connection has a locking element (25) for form-fitting bearing of the ball.

7. The crawler according to one of the preceding claims, in which
- the hoist cylinder (18) has a load sensor for determining the supported load,
- and/or a path sensor for determining the stroke travel.

8. The crawler according to one of the preceding claims, in which
- a control unit is provided for separate activation of the chain drive units (12a, 12b) and for the activation of the hoist cylinder (18).

9. The crawler according to claim 8, in which
- the control unit is connected with the rotary sensor (27) and/or a lifting sensor and/or a path sensor.

10. The crawler according to one of the preceding claims, in which
- a hydraulic system with a hydraulic pump is provided,
- and a propulsion motor is provided as a hydraulic motor respectively on the chain drive units (12a, 12b),
- wherein the propulsion motors and the hoist cylinder are operated with the hydraulic system.

11. A system for transporting loads with
- a plurality of crawlers (10) according to one of the preceding claims,
- which transport a common load (40) borne at the load bearings (20),
- with communication devices (38) in order to transmit sensor values and/or control commands between the crawlers (10) amongst each other and/or between the crawlers (10) and a head controller.

12. The system according to claim 11, in which
- control values for the angle of rotation are transmitted to the crawlers (10),
- wherein the controller of the crawlers (10) is designed such that it activates the chain drive units (12a, 12b) such that the control value of the angle of rotation at the load bearing (20) is reached.

13. The system according to one of claims 11, 12, in which
- the crawlers (10) have a load sensor for the load of the hoist cylinders (18),
- and the hoist cylinders (18) are activated such that load deviations are counterbalanced.

14. The system according to one of claims 11-13, in which
- a position sensor (46) for the load (40) is provided,
- wherein the hoist cylinders (18) of the crawlers (10) are activated such that the position of the load (40) is counterbalanced.

15. A method for transporting loads, in which
- a load (40) is borne jointly at the load bearings (20) of a plurality of crawlers (10) according to one of claims 1-8,
- and control commands are transmitted to the crawlers (10) in order to transport the load (40) through joint activation of the chain drive units (12a, 12b).

## Revendications

1. Chenille pour le transport de charges, comprenant au moins:
- deux unités d'entraînement de chaîne (12a, 12b),
- une unité d'appui (16) entre les unités d'entraînement de chaîne (12a, 12b),
- dans laquelle l'unité d'appui présente un récepteur de charge (20) pour une charge à transporter (40) et un cylindre de levage (18) avec un piston de levage (19) pour le réglage de la hauteur du récepteur de charge (20),
- dans laquelle le cylindre de levage et le piston de levage (19) sont fixés à l'unité d'appui (16) de façon non rotative,
- et dans laquelle le récepteur de charge (20) est accouplé au cylindre de levage (18) par le biais d'un assemblage à rotule/logement (22, 24) de manière à permettre un mouvement de rotation et de pivotement entre le récepteur de charge (20) et l'unité d'appui (16),
- et dans laquelle il est prévu un capteur de rotation (17, 27) destiné à détecter un angle de rotation entre le récepteur de charge (20) et le piston de levage (19) ou le cylindre de levage (18).

2. Chenille selon la revendication 1, dans laquelle
- le piston de levage (19) est reçu par complémentarité de forme avec une section transversale non ronde dans le cylindre de levage (18).

3. Chenille selon l'une des revendications précédentes, dans laquelle
- le capteur de rotation (17, 27) présente une première partie de capteur (17a, 62) accouplée sans rotation ni pivotement possible au cylindre de levage (18) ou au piston de levage (19),
- et une deuxième partie de capteur (17b) accouplée sans rotation ni pivotement possible au récepteur de charge,
- dans laquelle la deuxième partie de capteur (17b) est disposée de façon rotative et pivotante par rapport à la première partie de capteur (17a, 62),
- dans laquelle le capteur de rotation (17, 27) détecte l'angle de rotation entre la première partie de capteur (17a, 62) et la deuxième partie de capteur (17b).

4. Chenille selon la revendication 3, dans laquelle
- il est prévu un élément d'accouplement (68) disposé de façon rotative mais sans pivotement possible par rapport à une partie de capteur (62) et de façon pivotante mais sans rotation possible par rapport à l'autre partie de capteur.

5. Chenille selon l'une des revendications précédentes, dans laquelle
- le capteur de rotation (27) présente un accouplement à cardan (64) permettant de détecter l'angle de rotation indépendamment de mouvements de pivotement de l'assemblage à rotule/logement (22, 24).

6. Chenille selon l'une des revendications précédentes, dans laquelle
- l'assemblage à rotule/logement présente un élément de blocage (25) pour la réception par complémentarité de forme de la rotule.

7. Chenille selon l'une des revendications précédentes, dans laquelle
- le cylindre de levage (18) présente un capteur de charge destiné à détecter la charge déposée,
- et/ou un capteur de course destiné à détecter la course de levage.

8. Chenille selon l'une des revendications précédentes, dans laquelle
- il est prévu une unité de commande destinée à commander les unités d'entraînement de chaîne (12a, 12b) individuellement et à commander le cylindre de levage (18).

9. Chenille selon la revendication 8, dans laquelle
- l'unité de commande est reliée au capteur de rotation (27) et/ou à un capteur de levage et/ou à un capteur de course.

10. Chenille selon l'une des revendications précédentes, dans laquelle
- il est prévu un système hydraulique avec une pompe hydraulique,
- et il est prévu respectivement un moteur de déplacement en tant que moteur hydraulique sur les unités d'entraînement de chaîne (12a, 12b),
- dans laquelle les moteurs de déplacement et le cylindre de levage sont actionnés à l'aide du système hydraulique.

11. Système pour le transport de charges, comprenant :
- une pluralité de chenilles (10) selon l'une des revendications précédentes,
- lesquelles transportent une charge commune (40) reçue sur les récepteurs de charge (20),
- avec des dispositifs de communication (38) destinés à transmettre des valeurs de capteur et/ou des ordres de commande entre les chenilles (10) entre elles et/ou entre les chenilles (10) et une commande de tête.

12. Système selon la revendication 11, dans lequel
- des valeurs de commande pour l'angle de rotation sont transmises aux chenilles (10),
- dans lequel la commande des chenilles (10) est conçue de manière à commander les unités d'entraînement de chaîne (12a, 12b) de façon à atteindre la valeur de commande de l'angle de rotation sur le récepteur de charge (20).

13. Système selon l'une des revendications 11, 12, dans lequel
- les chenilles (10) présentent un capteur de charge pour la charge des cylindres de levage (18),
- et les cylindres de levage (18) sont commandés de manière à compenser des fluctuations de charge.

14. Système selon l'une des revendications 11 à 13, dans lequel
- il est prévu un capteur de position (46) pour la charge (40),
- dans lequel les cylindres de levage (18) des chenilles (10) sont commandés de manière à compenser la position de la charge (40).

15. Procédé pour le transport de charges, dans lequel
- une charge (40) est reçue conjointement sur les récepteurs de charge (20) d'une pluralité de chenilles (10) selon l'une des revendications 1 à 8,
- et des ordres de commande sont transmis aux chenilles (10) pour transporter la charge (40) par une commande conjointe des unités d'entraînement de chaîne (12a, 12b).
